# EUROPÄISCHE PATENTSCHRIFT

(11) **EP 0 596 956 B1**
(45) Veröffentlichungstag und Bekanntmachung des Hinweises auf die Patenterteilung: **17.04.1996**
(21) Anmeldenummer: 92916242.8
(22) Anmeldetag: 27.07.1992
(51) Int. Cl.: B23Q 39/02, B23Q 16/10, B23Q 1/25, B23Q 5/00

(54) **WERKZEUGREVOLVER FÜR EINE WERKZEUGMASCHINE, INSBESONDERE EINE DREHMASCHINE**
TOOL TURRET FOR A MACHINE-TOOL, ESPECIALLY A LATHE
REVOLVER PORTE-OUTILS POUR MACHINE-OUTIL, EN PARTICULIER POUR UN TOUR

(30) Priorität: 27.07.1991 DE 4125003
(43) Veröffentlichungstag der Anmeldung: 18.05.1994
(73) Patentinhaber: INDEX-WERKE GMBH & CO. KG HAHN & TESSKY, D-73726 Esslingen (DE)
(72) Erfinder: LINK, Friedrich, D-7307 Aichwald 1 (DE); GROSSMANN, Walter, D-7066 Baltmannsweiler (DE)
(74) Vertreter: Hoeger, Stellrecht & Partner
(86) Internationale Anmeldenummer: EP9201700
(87) Internationale Veröffentlichungsnummer: WO9302833

(56) Entgegenhaltungen:
- EP-A- 0 331 003
- CH-A- 665 585
- DE-A- 2 038 589
- DE-C- 3 730 561

## Beschreibung

Die Erfindung betrifft einen Werkzeugrevolver gemäß dem Oberbegriff des Patentanspruchs 1.

Ein solcher Werkzeugrevolver ist aus der CH-A-665 585 bekannt. Er hat einen Motor, mit dem sowohl ein Revolverkopf des Werkzeugrevolvers gedreht bzw. weitergeschaltet wird, als auch die vom Revolverkopf gehaltenen Werkzeuge, soweit es sich um angetriebene Werkzeuge handelt, angetrieben werden. Die Welle dieses Motors steht in ständiger Drehantriebsverbindung mit einer zur Revolverschaltachse koaxialen Werkzeug-Antriebswelle, welche über ein sich ständig im Eingriff befindliches Winkelgetriebe alle antreibbaren Werkzeuge ständig antreibt, und zwar auch während eines Weiterschaltens des Revolverkopfs, da letzteres ja von demselben Motor bewerkstelligt wird wie der Werkzeugantrieb. Am Revolverkopf ist eine Revolverkopf-Schaltwelle befestigt, welche von der Motorwelle über ein Untersetzungsgetriebe angetrieben wird, wenn eine Zahnkupplung zwischen diesem Untersetzungsgetriebe und einer mit der Motorwelle drehfest verbundenen und zu letzterer koaxialen Hohlwelle eingekuppelt wird. Der Verriegelung des Revolverkopfs gegenüber einem den letzteren lagernden Revolverkopfträger dient eine dreiteilige HIRTH-Verzahnung, deren einer Zahnring in Richtung der Revolverachse verschiebbar ist.

Diese bekannte Konstruktion hat zwar den Vorteil, daß zum Entriegeln des Revolverkopfs vor einem Weiterschalten des letzteren keine großen Massen bewegt werden müssen, wie dies bei den sonst allgemein gebräuchlichen Werkzeugrevolvern der Fall ist (siehe z. B. die DE-A-37 30 966 und die US-A-4 704 926), bei denen zum Ent- und Verriegeln des Revolverkopfs der letztere mit allen seinen Werkzeugen axial verschoben werden muß, während bei dem Werkzeugrevolver nach der CH-A-665 585 nur der eine Zahnring der dreiteiligen HIRTH-Verzahnung axial bewegt werden muß, was kurze Schaltzeiten ermöglicht; im permanenten Antrieb der angetriebenen Werkzeuge des Werkzeugrevolvers nach der CH-A-665 585, und zwar auch während eines Weiterschaltens des Revolverkopfs, ist jedoch ein erheblicher Nachteil zu sehen: Da zumindest während eines Weiterschaltens des Revolverkopfs, d. h. während eines Drehens des Revolverkopfs um die Revolverachse, die exakten Drehwinkelstellungen der angetriebenen Werkzeuge um die Werkzeugspindelachsen nicht erfaßt werden können (wegen des Untersetzungsgetriebes dreht sich der Revolverkopf auch relativ zur Werkzeug-Antriebswelle), lassen sich in diesem bekannten Werkzeugrevolver ausschließlich angetriebene Werkzeuge, wie Bohrer, verwenden, die unabhängig von ihrer momentanen Drehwinkelstellung zum Arbeitseinsatz gebracht werden können. Bei Bearbeitungen, die eine hohe Lagegenauigkeit und ständige Positionskontrolle (auf den Drehwinkel bezogen) der Werkzeuge erfordern, z. B. beim Abwälzfräsen von Evolventenverzahnungen oder der Herstellung von Gewindeschnecken, kann mit dem sich aus der CH-A-665 585 bekannten Werkzeugrevolver also nicht gearbeitet werden.

Damit versteht es sich auch von selbst, daß es bei diesem bekannten Werkzeugrevolver nicht möglich ist, nur ein einzelnes Werkzeug anzutreiben oder ein sich nicht in Arbeitsposition befindliches Werkzeug gegen ein unerwünschtes Verdrehen zu verriegeln.

Schließlich sei noch darauf hingewiesen, daß bei dem aus der CH-A-665 585 bekanntgewordenen Werkzeugrevolver die Betätigung der HIRTH-Verzahnung zum Entriegeln bzw. Verriegeln des Revolverkopfs und das Einkuppeln der Revolver-Schaltwelle mit zwei Hydrauliksystemen bewerkstelligt werden.

Der Erfindung lag nun die Aufgabe zugrunde, einen Werkzeugrevolver mit den Merkmalen des Oberbegriffs des Anspruchs 1, d. h. einen Werkzeugrevolver, der nur einen Motor für das Weiterschalten des Revolverkopfs und den Antrieb der Werkzeuge benötigt und dessen Revolverkopf unter Einhaltung kurzer Schaltzeiten weitergeschaltet werden kann, so zu verbessern, daß sich mit ihm auch Bearbeitungen durchführen lassen, für die ein Werkzeug Drehwinkel-positionsgenau zum Einsatz gebracht werden muß.

Diese Aufgabe wird erfindungsgemäß durch die Merkmale des Anspruchs 1 gelöst. Durch die erfindungsgemäße Gestaltung der Werkzeugantriebskupplung ist immer nur die Werkzeugspindel desjenigen Werkzeugs eingekuppelt, welches sich gerade in Arbeitsposition befindet, wobei keine besonderen Betätigungsmittel für die Werkzeugantriebskupplung erforderlich sind, da letztere beim Weiterdrehen des Revolverkopfs automatisch ausgerückt bzw. eingerückt wird. Außerdem erlaubt es die erfindungsgemäße Ausbildung der Werkzeugantriebskupplung, die nicht in Arbeitsposition befindlichen Werkzeuge auf einfachste Weise gegen Verdrehen zu sichern, nämlich durch das Werkzeugspindel-Blockierelement. Infolge der zwischen der Multifunktionswelle und der Werkzeugantriebswelle vorgesehenen, schaltbaren Trennkupplung werden die Werkzeuge trotz der Verwendung nur eines einzigen Motors beim Weiterschalten des Revolverkopfs nicht gedreht, und die Antriebswellen-Blockierkupplung sorgt dafür, daß ein sich noch in Arbeitsstellung befindliches Werkzeug bzw. ein gerade in Arbeitsposition gebrachtes Werkzeug seine für die Bearbeitung erforderliche, durch die Maschinensteuerung eingestellte Drehwinkelposition nicht verlieren kann, während der Revolverkopf entriegelt bzw. verriegelt wird, obwohl ein solches Werkzeug von dem Werkzeugspindel-Blockierelement nicht mehr in der besagten Drehwinkelposition gehalten wird.

Wenn vorstehend davon die Rede ist, daß die die beiden voneinander trennbaren Kupplungselemente aufweisende Werkzeugantriebskupplung für die Herstellung einer Drehantriebsverbindung zwischen der Werkzeugantriebswelle und der Werkzeugspindel eines sich in Arbeitsposition befindenden Werkzeughalters vorgesehen ist, so ergibt sich schon aus dieser Formulierung, daß eines der Kupplungselemente nicht notwendigerweise unmittelbar an der Werkzeugantriebswelle angeordnet sein muß, da sich zwischen letzterer und der Werkzeugspindel ohne weiteres ein einen Drehantrieb bewerkstelligendes Zwischenelement befinden kann; so könnte die Werkzeugantriebswelle z. B. parallel zur Revolverachse verlaufen und über ein Winkelgetriebe mit einer bezüglich der Revolverachse radial orientierten Zwischenwelle in Drehantriebsverbindung stehen, welcheletztere dann das eine Kupplungselement trägt und mit der Werkzeugspindel eines sich in Arbeitsposition befindlichen Werkzeughalters fluchtet. Die erfindungsgemäße Lösung läßt sich aber auch auf Werkzeugrevolver anwenden, bei denen die Werkzeugspindeln parallel zur Revolverachse orientiert sind. Bevorzugt werden jedoch Ausführungsformen, bei denen sich die Werkzeugantriebswelle bezüglich der Revolverachse in radialer Richtung erstreckt, wobei sie dann mit einer Werkzeugspindel fluchten ober über ein Winkelgetriebe eine mit der Werkzeugspindel fluchtende Zwischenwelle antreiben kann, zwischen welcher und der Werkzeugspindel dann besagte Kupplung vorgesehen ist.

Normalerweise wird man nur ein einziges, in einer einzigen Arbeitsposition befindliches Werkzeug antreiben wollen; mit der Werkzeugantriebswelle eines erfindungsgemäßen Werkzeugrevolvers lassen sich aber auch ohne weiteres zwei Werkzeuge antreiben, wofür eine Ausführungsform empfohlen wird, bei der die Werkzeugantriebswelle zwei Arbeitspositionen für einander bezüglich der Revolverachse in radialer Richtung gegenüberliegende Werkzeugstationen definiert und mit zwei ersten Kupplungselementen versehen ist.

Die Kupplungselemente der zwischen Werkzeugantriebswelle und Werkzeugspindel vorgesehenen Kupplung könnten in vielfältiger Weise ausgebildet sein, solange sie es nur erlauben, die beiden Kupplungselemente durch Drehen des Revolverkopfs voneinander zu trennen bzw. miteinander in Eingriff zu bringen; so könnte das eine Kupplungselement z. B. einen bezüglich der Revolverachse tangential orientierten Dorn haben, welcher durch Drehen des Revolverkopfs in eine entsprechend orientierte Bohrung des anderen Kupplungselements einfahrbar ist. Am einfachsten ist jedoch eine Ausführungsform, bei der das eine Kupplungselement wenigstens eine sich quer zur Achse der Werkzeugantriebswelle bzw. der Werkzeugspindel erstreckende Nut und das andere Kupplungselement wenigstens einen entsprechend orientierten Vorsprung zum Eingriff in diese Nut aufweist, denn eine solche Konstruktion ist nicht nur einfach zu fertigen, sondern sie erlaubt auch ein Drehen des Revolverkopfs in beiden Richtungen. Die beiden Kupplungselemente könnten also z. B. an ihren einander zugewandten Stirnseiten jeweils ein Kammprofil aufweisen derart, daß die beiden Kammprofile durch Drehen des Revolverkopfs zum Eingriff miteinander gebracht werden können.

Bei erfindungsgemäßen Werkzeugrevolvern mit bezüglich der Revolverachse in radialer Richtung orientierter Werkzeugantriebswelle empfehlen sich Ausführungsformen, bei denen eine zur Revolverachse konzentrische, in einer bezüglich des Revolverkopfträgers festen Lagerung drehbar gelagerte Zentralwelle vorgesehen ist, die über ein Winkelgetriebe in ständiger Antriebsverbindung mit der Werkzeugantriebswelle steht. Bei einem solchen Werkzeugrevolver wird das Winkelgetriebe stets von denselben Getrieberädern gebildet, so daß ein dieses Winkelgetriebe bildendes Kegelradpaar z. B. eingeläppt werden kann und sich mit höheren Drehzahlen betreiben läßt als Winkelgetriebe mit nach einem Weiterschalten des Revolverkopfs stets neu zu bildenden Kegelradpaaren. Des weiteren läßt sich ein ein solches Winkelgetriebe aufnehmender Hohlraum des erfindungsgemäßen Werkzeugrevolvers problemlos abdichten, so daß man für das Winkelgetriebe ein Ölbad vorsehen kann. Ein ganz wesentlicher Vorteil der ständigen Antriebsverbindung zwischen Zentralwelle und Werkzeugantriebswelle ist aber auch darin zu sehen, daß nicht der Fall auftreten kann, daß nach einem Weiterschalten des Revolverkopfs die Getrieberäder des Winkelgetriebes nicht in Eingriff miteinander gebracht werden können, weil sie Zahn auf Zahn stehen.

Für Ausführungsformen, bei denen die Werkzeugantriebswelle mit einer sich in Arbeitsposition befindlichen Werkzeugspindel fluchtet, lassen sich kleine Fluchtfehler dadurch vermeiden, daß das erste Kupplungselement über eine elastische Verbindung derart an der Werkzeugantriebswelle angeordnet ist, daß das erste Kupplungselement quer zur Achse der Werkzeugantriebswelle auslenkbar ist. Eine solche Konstruktion ist besonders vorteilhaft in Verbindung mit Kupplungselementen, bei denen ein oder mehrere Vorsprünge des einen Kupplungselements in eine oder mehrere Nuten des anderen Kupplungselements eingreifen, wobei diese Nut bzw. diese Nuten quer zur Achse der Werkzeugantriebswelle bzw. der Werkzeugspindel verläuft bzw. verlaufen.

Das Blockierelement, mit dem die nicht in Arbeitsposition befindlichen Werkzeugspindeln gegen Verdrehen gesichert werden, muß nur so angebracht sein, daß es sich nicht mit dem Revolverkopf dreht. Bevorzugt werden jedoch Ausführungsformen, bei denen das Blockierelement unmittelbar oder mittelbar fest mit dem Revolverkopfträger verbunden ist.

Es sind die unterschiedlichsten Ausführungsformen der aus Blockierelement und Werkzeugspindel (oder einem mit letzterer fest verbundenen Teil) bestehenden Blockiervorrichtung möglich; so könnte das Blockierelement z. B. ein starker Magnet sein, der mit exzentrisch angeordneten Magneten der Werkzeugspindeln bzw. der zweiten Kupplungselemente zusammenwirkt. Viel einfacher ist es jedoch, wenn das Blockierelement eine zur Revolverachse konzentrische erste Gleitfläche aufweist, gegen welche eine Werkzeugspindel-feste zweite Gleitfläche anliegt, wenn sich der zugehörige Werkzeughalter nicht in der Arbeitsposition befindet. Die zweite Gleitfläche muß dann nur so ausgebildet sein, daß sie, wenn sie gegen die erste Gleitfläche anliegt, ein Verdrehen der Werkzeugspindel um ihre Achse nicht zuläßt. Da, wie im folgenden noch gezeigt werden wird, bei bevorzugten Ausführungsformen des erfindungsgemäßen Werkzeugrevolvers der Revolverkopf nur dann weitergeschaltet wird bzw. werden kann, wenn die sich gerade in Arbeitsposition befindliche Werkzeugspindel bzw. die Werkzeugantriebswelle eine bestimmte Drehwinkelposition einnimmt, kann ohne weiteres gewährleistet werden, daß die Werkzeugspindel-feste zweite Gleitfläche beim Weiterschalten des Revolverkopfs so orientiert ist, daß sie parallel zur ersten Gleitfläche des Blockierelements verläuft und beim Drehen des Revolverkopfs zumindest nahezu spielfrei gegen diese erste Gleitfläche angelegt wird. Die erwähnte zweite Gleitfläche könnte an den Werkzeugspindeln selbst vorgesehen sein, aus dem Folgenden kann man jedoch erkennen, daß sich eine besonders einfache Konstruktion dann ergibt, wenn die zweite Gleitfläche an dem zweiten Kupplungselement vorgesehen wird.

Die beiden Gleitflächen können von unterschiedlichster Gestalt sein, solange sie nur ein Drehen des Revolverkopfs zulassen; so könnte es sich z. B. um im Axialschnitt (bezüglich der Revolverachse) konvexe und konkave, im Profil aneinander angepaßte Flächen handeln. Zur Vereinfachung der Herstellung des erfindungsgemäßen Werkzeugrevolvers wird jedoch empfohlen, eine der beiden Gleitflächen von einer sich bezüglich der Revolverachse in Umfangsrichtung erstreckenden Rippe und die andere Gleitfläche von einer für einen Eingriff dieser Rippe gestalteten Nut bilden zu lassen.

Besonders vorteilhafte Ausführungsformen des erfindungsgemäßen Werkzeugrevolvers sind so gestaltet, daß wenigstens eine Kupplungshälfte der Antriebswellen-Blockierkupplung zwischen einer wirksamen und einer unwirksamen Stellung bewegbar ist und daß Bewegungsübertragungsmittel für eine Bewegung der beweglichen Kupplungshälfte in Abhängigkeit von der Verschiebung des dritten Verriegelungselements vorgesehen sind derart, daß die Antriebswellen-Blockierkupplung bei entriegeltem Revolverkopf eingekuppelt ist. Bei einer solchen Konstruktion ist kein besonderer Druckmittelzylinder oder dergleichen erforderlich, um die Antriebswellen-Blockierkupplung zu betätigen, da letztere durch die Bewegungsübertragungsmittel mitbetätigt wird, wenn das dritte Verriegelungselement verschoben wird.

Von Vorteil ist es auch, wenn Bewegungsübertragungsmittel zum Schalten der Trennkupplung und der Revolverschaltkupplung in Abhängigkeit von der Verschiebung des dritten Verriegelungselements vorgesehen sind, und zwar derart, daß bei entriegeltem Revolverkopf die Trennkupplung ausgekuppelt und die Revolverschaltkupplung eingekuppelt ist. Durch eine solche Konstruktion wird nämlich sichergestellt, daß der Revolverkopfantrieb nur dann in Funktion treten kann, wenn der Revolverkopf entriegelt und die Werkzeugantriebswelle gegen ein unbeabsichtigtes Verdrehen gesichert ist.

Bei bevorzugten Ausführungsformen des erfindungsgemäßen Werkzeugrevolvers lassen sich sämtliche Schaltvorgänge mit Ausnahme des Drehens des Revolverkopfs (insbesondere hydraulisch) mit nur einem einzigen Druckmittelbetätigten Kolben oder zwei solcher Kolben bewerkstelligen, und zur weiteren Vereinfachung der Konstruktion wird empfohlen, das dritte Verriegelungselement direkt als Ringkolben einer zur Revolverachse konzentrischen Druckmittel Zylinder-Kolben-Einheit auszubilden. Dieser Ringkolben könnte von beiden Seiten mit Druckmittel beaufschlagt werden, so daß sich dann mit ihm der Revolverkopf sowohl entriegeln, als auch verriegeln ließe. Vor allem aus Gründen der Ableitung anderer Funktionen von der Entriegelungsbewegung des dritten Verriegelungselements wird jedoch empfohlen, den die Verriegelung bewirkenden Kolben als einseitig Druckmittel-beaufschlagten Kolben zu gestalten und eine zweite Druckmittel-Zylinder-Kolben-Einheit zum Entriegeln des Revolverkopfs vorzusehen. Diese Maßnahme ermöglicht es z. B., eine einfache Schleppverbindung zwischen dem Kolben der Entriegelungseinheit und der bewegbaren Kupplungshälfte der Revolverschaltkupplung vorzusehen, ebenso aber auch zwischen dem Kolben der Entriegelungseinheit einerseits und der Trennkupplung sowie der Revolverschaltkupplung andererseits.

Im folgenden soll die Erfindung anhand der beigefügten Zeichnung noch näher erläutert werden, wobei die Figuren 1-4 nicht Ausführungsarten der Erfindung, sondern das Verständnis der Erfindung erleichternde Beispiele zeigen; in der Zeichnung zeigen:
- Fig. 1A: einen axialen Schnitt durch eine erste Ausführungsform eines Werkzeugrevolvers, welcher jedoch insofern nicht erfindungsgemäß gestaltet ist, als er zwei Motoren zum Werkzeugantrieb einerseits und zum Schalten des Revolverkopfs andererseits aufweist;
- Fig. 1B: einen Ausschnitt aus Fig. 1A in größerem Maßstab;
- Fig. 2: einen Schnitt durch einen Teil des Revolverkopfs und des von letzterem umfaßten Getriebegehäuses entsprechend der Linie 2-2 in Fig. 1A;
- Fig. 3A: eine Draufsicht auf ein erstes Kupplungselement, gesehen in Richtung der Werkzeugantriebswellenachse, in Verbindung mit einer Seitenansicht eines dazu passenden zweiten Kupplungselements einer Werkzeugspindel;
- Fig. 3B: eine Seitenansicht des ersten Kupplungselements, und zwar in Fig. 3A von oben gesehen;
- Fig. 4: eine Stirnansicht des die Bewegungsübermittlung vom dritten Verriegelungselement zur Revolverschaltkupplung bewerkstelligenden Teils, und zwar gemäß Fig. 1A von links gesehen;
- Fig. 5A: eine der Fig. 1 entsprechende Darstellung einer zweiten, insgesamt erfindungsgemäß gestalteten Ausführungsform eines Werkzeugrevolvers mit nur einem einzigen Motor für den Werkzeugantrieb und das Drehen des Revolverkopfs;
- Fig. 5B: eine der Fig. 1B entsprechende Darstellung der zweiten Ausführungsform.

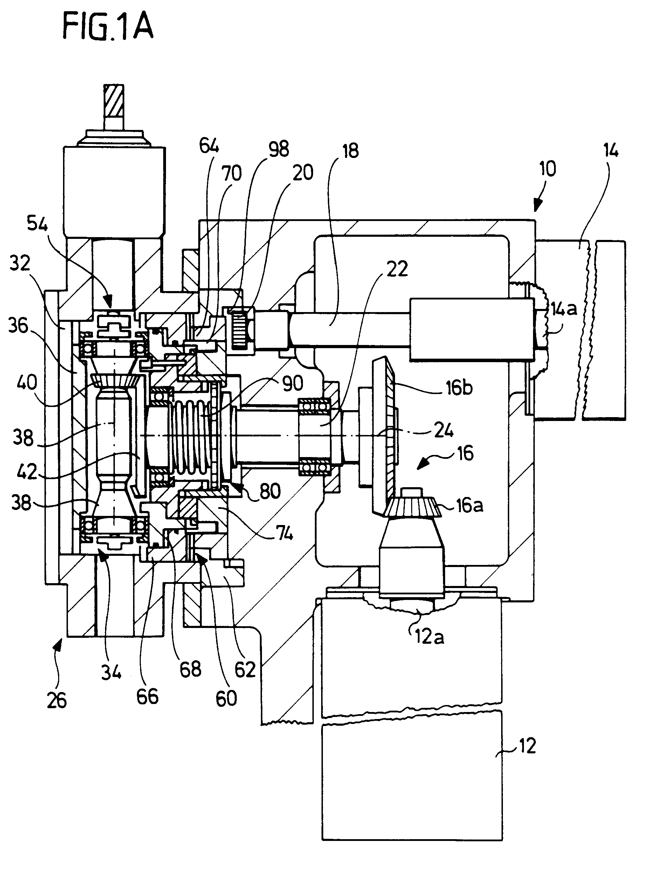

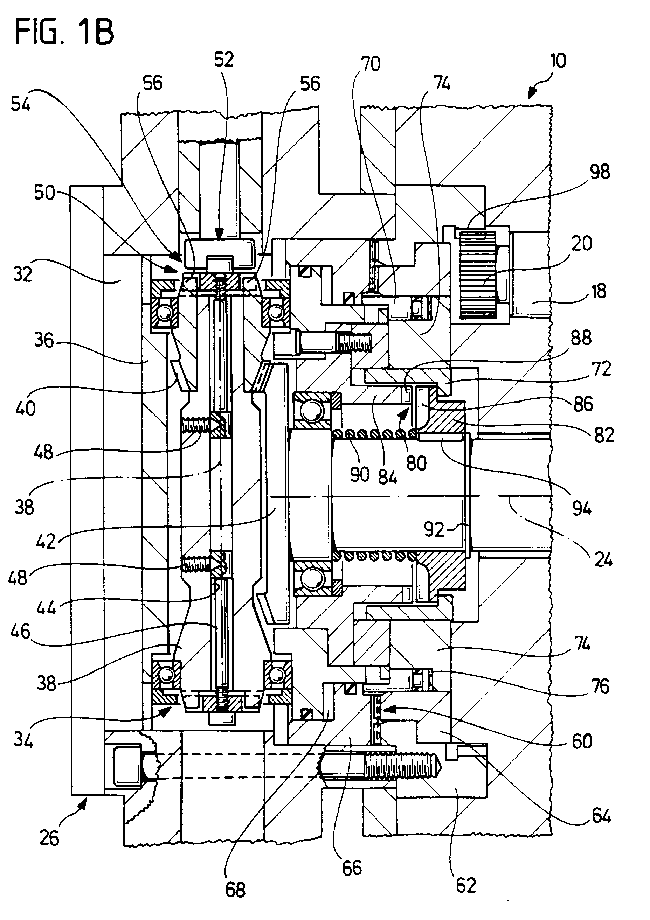

Die Figuren 1A und 1B zeigen einen gehäuseförmigen Revolverkopfträger 10, der z. B. auf einem Schlitten einer Drehmaschine montiert sein kann. An ihm sind ein erster Motor 12 zum Antreiben von Werkzeugen und ein zweiter Motor 14 zum Drehen bzw. Schalten eines Revolverkopfs befestigt, wobei auf einer Motorwelle 12a des ersten Motors ein erstes Kegelrad 16a eines Winkelgetriebes 16 befestigt ist, während eine Motorwelle 14a des zweiten Motors 14 eine Schaltwelle 18 für einen Revolverkopf antreibt. Am vorderen Ende der Schaltwelle 18 ist ein Ritzel 20 befestigt. Im Revolverkopfträger 10 ist schließlich eine Zentralwelle 22 um eine Revolverachse 24 drehbar, axial jedoch unverschiebbar gelagert, an deren hinterem Ende ein zweites Kegelrad 16b des Winkelgetriebes 16 befestigt ist, welches sich mit dem Kegelrad 16a in ständigem Eingriff befindet.

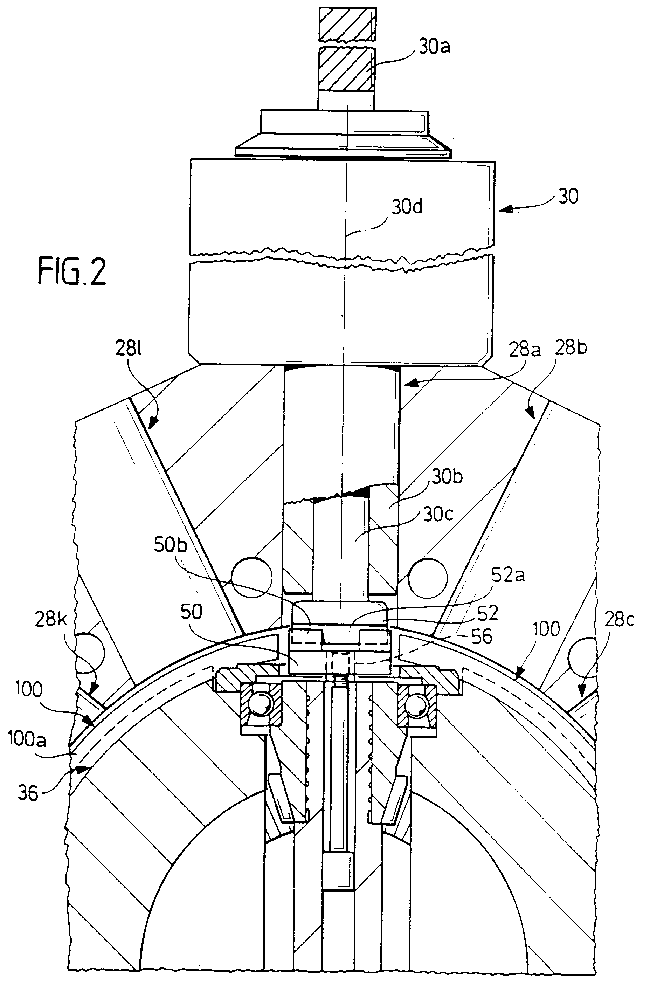

Am Revolverkopfträger 10 ist ein Revolverkopf 26 um die Revolverachse 24 drehbar, jedoch in axialer Richtung unverschieblich gelagert. Bei der dargestellten Ausführungsform besitzt der Revolverkopf 26 zwölf Werkzeugstationen 28a bis 281 (siehe Fig. 2, welche jedoch nur einen Teil dieser Werkzeugstationen zeigt), welche bei der dargestellten Ausführungsform durch bezüglich der Revolverachse 24 radiale Aufnahmebohrungen für Werkzeugträger gebildet werden, wobei in den Figuren 1 und 2 nur ein einziger solcher Werkzeugträger 30 mit einem antreibbaren, hier als Fräser dargestellten Werkzeug 30a gezeichnet wurde. Diese Werkzeugträger besitzen einen Halteschaft 30b, der im Revolverkopf 26 durch nicht näher dargestellte Mittel festgespannt werden kann, sowie eine Werkzeugspindel 30c, die im Werkzeugträger um eine Spindelachse 30d drehbar, jedoch in axialer Richtung unverschiebbar gelagert ist. Bei der bevorzugten Ausführungsform verlaufen die Spindelachsen 30d bezüglich der Revolverachse 24 in radialer Richtung, und dies gilt auch für das dargestellte Werkzeug 30a, obwohl es auf der Hand liegt, daß in einem solchen Werkzeugträger auch ein Winkelgetriebe enthalten sein könnte, um ein anders orientiertes Werkzeug antreiben zu können.

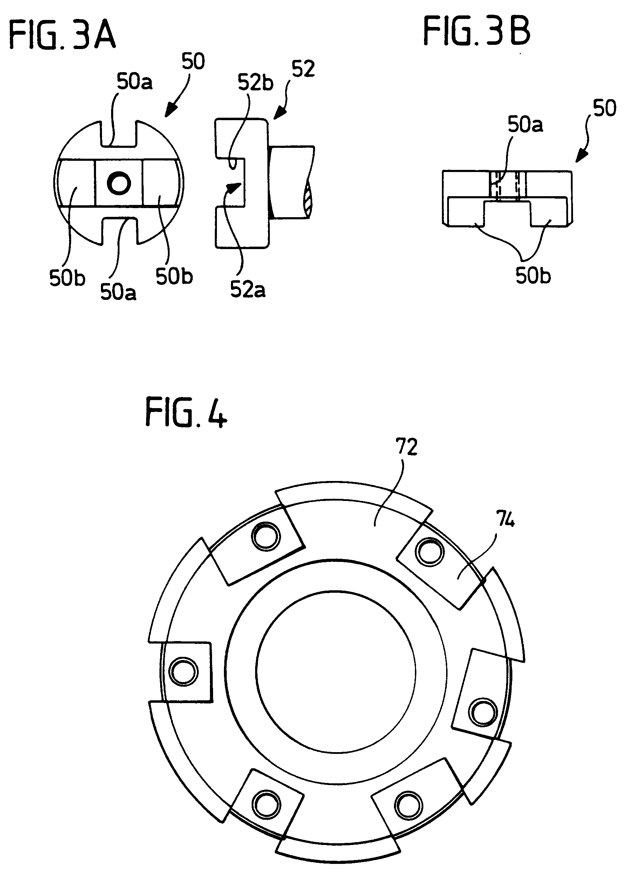

Das Innere des Revolverkopfs 26 bildet einen Hohlraum 32 zur Aufnahme eines als Ganzes mit 34 bezeichneten und am Revolverkopfträger 10 befestigten Getriebes. Letzteres hat ein Getriebegehäuse 36, in dem eine Werkzeugantriebswelle 38 drehbar, jedoch in Richtung der Wellenachse unverschiebbar gelagert ist. Die Antriebswellenachse 38a ist erfindungsgemäß so orientiert, daß sie die Revolverachse 24 schneidet und senkrecht zu letzterer verläuft. An der des weiteren erfindungsgemäß als Hohlwelle ausgebildeten Antriebswelle 38 ist ein Kegelrad 40 vorgesehen, welches sich erfindungsgemäß in ständigem Eingriff mit einem Kegelrad 42 befindet, das am vorderen Ende der Zentralwelle 22 befestigt ist, wobei diese beiden Kegelräder ein Winkelgetriebe bilden. In einer zur Antriebswellenachse 38a konzentrischen Längsbohrung 44 der Antriebswelle 38 ist ein Biegestab 46 angeordnet, welcher in einem mittleren Bereich größeren Durchmessers mittels Spannschrauben 48 in der Antriebswelle 38 festgelegt ist und an den freien Enden von im Durchmesser kleineren Bereichen jeweils ein erstes Kupplungselement 50 trägt, welches mit einem zweiten Kupplungselement 52 einer als Ganzes mit 54 bezeichneten ersten Kupplung zusammenwirkt. Die beiden Kupplungselemente sind an dem Biegestab 46 bzw. der Werkzeugspindel 30c fest angebracht und sollen im folgenden anhand der Figuren 3A und 3B näher erläutert werden.

Die beiden Kupplungselemente 50 und 52 haben die Gestalt flacher Scheiben; das erste Kupplungselement 50 besitzt an seinem Umfang zwei einander gegenüberliegende, ungefähr rechteckige Nuten 50a und an seiner dem zweiten Kupplungselement 52 zugewandten Stirnseite zwei ungefähr würfelförmige Vorsprünge 50b zum Eingriff in eine Nut 52a des zweiten Kupplungselements 52.

Wie vor allem die Figuren 1B und 2 erkennen lassen, sind an den Enden der Antriebswelle 38 jeweils zwei Klauen 56 befestigt, die sich in Richtung der Antriebswellenachse 38a erstrecken und in die Nuten 50a der beiden ersten Kupplungselemente 50 eingreifen, und zwar so, daß bei nicht ausgelenktem Biegestab 46 die beiden Klauen eines Klauenpaares nicht gegen den Grund der jeweils zugehörigen Nut 50a anliegen. Auf diese Weise kann ein erstes Kupplungselement 50 in beiden Richtungen quer zur Antriebswellenachse 38a etwas verschoben werden, und zwar in Richtung der Verbindungslinie zwischen den beiden zugehörigen Klauen 56. Andererseits lassen sich die beiden Vorsprünge 50b in der Nut 52a verschieben, und da, wie die Fig. 3A zeigt, eine Verbindungslinie zwischen den beiden Vorsprüngen 50b senkrecht zu einer Verbindungslinie zwischen den beiden Nuten 50a verläuft, ermöglichen die beiden Kupplungselemente 50 und 52 in Verbindung mit dem Biegestab 46 einen Ausgleich für kleine Fluchtfehler, wenn nämlich die Spindelachse 30d eines Werkzeugträgers 30 nicht exakt mit der Antriebswellenachse 38a fluchtet. Die erste Kupplung 54 ist also so ausgebildet, daß sie Verschiebungen ihrer beiden Kupplungselemente relativ zueinander längs zweier Querachsen erlaubt.

Eine dreiteilige sogenannte HIRTH-Verzahnung 60 dient dazu, den Revolverkopf 26 gegenüber dem Revolverkopfträger 10 zu verriegeln, und zwar gegen ein Drehen um die Revolverachse 24. Derartige dreiteilige HIRTH-Verzahnungen sind bekannt und sie sind so gestaltet, daß die HIRTH-Verzahnung 60 den Revolverkopf 26 bezüglich der Revolverachse 24 zentriert, wenn der Revolverkopf verriegelt ist. Deshalb ist der Revolverkopf 26 am Revolverkopfträger 10 in solchen Gleitlagern gelagert, daß diese keine Zentrierung des Revolverkopfs bezüglich der Revolverachse 24 ergeben, um zu vermeiden, daß das System überbestimmt ist. Im folgenden sollen nun die HIRTH-Verzahnung 60 und ihre Funktion im einzelnen erläutert werden:

Sie besteht aus drei zur Revolverachse 24 konzentrischen Ringen, nämlich einem ersten, am Revolverkopf 26 befestigten Ring 62, einem zweiten, am Revolverkopfträger 10 befestigten Ring 64 und einem dritten Ring 66, welcher den beiden Ringen 62 und 64 gegenübersteht und im Revolverkopf 26 in Richtung der Revolverachse 24 verschiebbar gelagert ist. An ihren dem dritten Ring 66 zugewandten Stirnseiten ist der erste Ring 62 und der zweite Ring 64 jeweils mit einem Zahnring versehen, und der dritte Ring 66 weist an seiner den beiden anderen Ringen zugewandten Stirnseite einen dritten Zahnring auf, welcher in der in den Figuren 1A und 1B dargestellten Position des dritten Rings 66 in die Zahnringe der beiden anderen Ringe 62 und 64 spielfrei eingreift. In diesem Zustand kann der Revolverkopf 26 gegenüber dem Revolverkopfträger 10 nicht verdreht werden. Wie sich am besten der Fig. 1B entnehmen läßt, ist links vom dritten Ring 66 ein Druckraum 68 vorgesehen, in den über nicht dargestellte Kanäle ein Druckmittel, insbesondere Hydrauliköl, einleitbar ist, um den dritten Ring 66 gegen die beiden anderen Ringe 62 und 64 zu pressen. Das Getriebegehäuse 36 und der Revolverkopf 26 bilden also einen Druckmittelzylinder für einen Ringkolben, welcher vom dritten Ring 66 gebildet wird.

Zum Entriegeln des Revolverkopfs 26 bzw. zum Verschieben des dritten Rings 66 gemäß Fig. 1B nach links ist ein zweiter, zur Revolverachse 24 konzentrischer Ringkolben 70 vorgesehen, welcher im folgenden als Entriegelungskolben bezeichnet werden wird. Wie in Fig. 1B dargestellt, ist die gemäß dieser Figur linke Stirnseite des Entriegelungskolbens 70 abgestuft ausgebildet, so daß er einerseits gegen die rechte Stirnseite des dritten Rings 66 anliegt und andererseits eine Auflage für eine gleichfalls zur Revolverachse 24 konzentrische Verschiebehülse 72 bildet und letztere infolgedessen bei einer Verschiebung des Entriegelungskolbens 70 nach links mitnimmt, da die Verschiebehülse 72 in Richtung der Revolverachse 24 verschiebbar gelagert ist. Der Entriegelungskolben 70 ist zwischen dem zweiten Ring 64 und einem gleichfalls am Revolverkopfträger 10 befestigten Führungsring 74 in Richtung der Revolverachse 24 verschiebbar gelagert und die Ringe 64 und 74 bilden gemäß Fig. 1B rechts vom Entriegelungskolben 70 einen Druckraum 76, in den sich über einen nicht gezeigten Kanal Druckmittel, insbesondere Hydrauliköl, einleiten läßt, um so den Entriegelungskolben 70 und damit den dritten Ring 66 nach links zu verschieben und dadurch den Revolverkopf 26 zu entriegeln, ohne daß dieser selbst in axialer Richtung verschoben werden muß. Wie sich der Fig. 4 entnehmen läßt, greift die Verschiebehülse 72 mit Vorsprüngen durch im Führungsring 74 vorgesehene Aussparungen in radialer Richtung nach außen hindurch, und diese Vorsprünge liegen gegen die gemäß Fig. 1B linke Stirnseite des Entriegelungskolbens 70 an.

Eine zur Zentralwelle 22 konzentrische zweite Kupplung wurde als Ganzes mit 80 bezeichnet. Sie wird von einer ringförmigen, zur Revolverachse 24 konzentrischen Kupplungsscheibe 82 und einem halsförmigen Ansatz 84 des Getriebegehäuses 36 gebildet, welche an ihren einander zugewandten Stirnseiten mit jeweils einem ringförmigen, zur Revolverachse 24 konzentrischen Satz von Klauen 86 bzw. 88 versehen sind, die bei einem Verschieben der Kupplungsscheibe 82 gemäß Fig. 1B nach links zumindest nahezu spielfrei ineinandergreifen können. Die Kupplungsscheibe 82 ist auf der Zentralwelle 22 in Richtung der Revolverachse 24 verschiebbar gelagert und wird in ihrer in Fig. 1B dargestellten Position durch eine Druckfeder 90 gegen einen Ringbund 92 der Zentralwelle 22 gedrückt. Andererseits ist die Kupplungsscheibe 82 drehfest mit der Zentralwelle 22 verbunden, und zwar mittels Paßfedern 94 an der Zentralwelle 22 und entsprechend ausgebildeten, nicht dargestellten axialen Nuten am Innenumfang der Kupplungsscheibe 82. Da das Getriebegehäuse 36 am Revolverkopfträger 10 befestigt ist, die Kupplungsscheibe 82 drehfest mit der Zentralwelle 22 verbunden ist und schließlich jeder Drehwinkelstellung der Zentralwelle 22 eine ganz bestimmte Drehwinkelstellung eines mit Hilfe der ersten Kupplung 54 eingekuppelten Werkzeugs 30a zugeordnet ist, lassen sich die Klauen 86 und 88 der zweiten Kupplung 80 nur in ganz bestimmten Drehwinkelstellungen des Werkzeugs 30a zum Eingriff miteinander bringen - dabei handelt es sich natürlich um dasjenige Werkzeug 30a, welches bzw. dessen Werkzeugstation 28a sich in einer Arbeitsposition befindet, welche durch die Lage der Antriebswelle 38 bestimmt und definiert wird.

Wird der Revolverkopf 26 durch Lösen der HIRTH-Verzahnung 60 entriegelt, d. h. der Entriegelungskolben 70 gemäß Fig. 1B nach links verschoben, wird gleichzeitig die Zentralwelle 22 verriegelt, so daß sich auch das Werkzeug 30a nicht mehr drehen kann. Gleichzeitig kann durch die Ausbildung der Klauensätze 86, 88 gewährleistet werden, daß sich der Revolverkopf 26 nur dann entriegeln läßt, wenn das Werkzeug 30a eine ganz bestimmte Drehwinkellage einnimmt bzw. bei der dargestellten bevorzugten Ausführungsform eine von zwei ganz bestimmten Drehwinkellagen, bei denen sich die Nut 52a des zu diesem Werkzeug gehörenden zweiten Kupplungselements 52 in einer Richtung erstreckt, die tangential zur Revolverachse 24, d. h. senkrecht zur Zeichnungsebene der Fig. 1B ist. Dadurch wird nicht nur gewährleistet, daß angetriebene Werkzeuge stets drehwinkelgerecht zum Einsatz gebracht werden, sondern daß sich die erste Kupplung 54 nach dem Entriegeln des Revolverkopfs 26 allein durch Drehen des Revolverkopfs um die Revolverachse 24 lösen läßt (die Figuren 1A und 1B zeigen das Werkzeug 30a in dieser Stellung, in der sich nach Entriegelung des Revolverkopfs 26 der letztere um die Revolverachse 24 drehen läßt). Natürlich hängt die Anzahl der Klauen der Klauensätze 86, 88 von dem Übersetzungsverhältnis zwischen den Kegelrädern 40 und 42 ab, damit gewährleistet ist, daß immer dann, wenn die Klauen 86 und 88 ineinander greifen, die Nut 52a senkrecht zur Zeichnungsebene der Fig. 1B orientiert ist. Schließlich soll vorsorglich noch darauf hingewiesen werden, daß die Verdrehsicherung eines Werkzeugs mit Hilfe der Kupplung 80 nur so lange gewährleistet ist, als sich die beiden Kupplungselemente 50 und 52 im Eingriff miteinander befinden.

Um den Revolverkopf 26 nach dem Entriegeln drehen zu können, greift das Ritzel 20 der Schaltwelle 18 in einen Zahnkranz 98 ein, der an dem mit dem Revolverkopf 26 fest verbundenen ersten Ring 62 der HIRTH-Verzahnung 60 vorgesehen ist.

Anhand der Fig. 2 soll nun erläutert werden, wie die Werkzeugspindeln 30 derjenigen Werkzeuge, welche sich nicht in einer Arbeitsposition befinden, während des Arbeitens mit einem Revolverwerkzeug, aber auch während des Weiterschaltens des Revolverkopfs 26 an einem unerwünschten Verdrehen gehindert werden. In diesem Zusammenhang ist zu beachten, daß bei dem dargestellten Werkzeugrevolver für dessen antreibbare Werkzeuge zwei einander diagonal gegenüberliegende Arbeitspositionen vorgesehen sind, welche durch die Antriebswelle 38 definiert werden und von denen die Fig. 2 nur eine erkennen läßt, nämlich diejenige, in der sich die Werkzeugstation 28a gerade befindet. Deshalb sind am Getriebegehäuse 36 zwei nahezu halbkreisförmige Rippen oder Schienen 100 befestigt, welche in die Nuten 52a der zweiten Kupplungselemente 52 derjenigen Werkzeuge eingreifen, welche sich nicht in einer Arbeitsposition befinden, während die beiden Rippen 100 für jede Arbeitsstation eine in Fig. 2 erkennbare Lücke bilden. Jede dieser Rippen 100 bildet auf ihren einander gegenüberliegenden Seiten jeweils eine Gleitfläche 100a, von denen wenigstens eine mit einer der beiden Seitenwände der Nut 52a zusammenwirkt, so daß die beiden Nutseitenwände Gleitflächen 52b bilden.

Dadurch wird sichergestellt, daß beim Weiterschalten des Revolverkopfs 26 die zu einem neu zum Einsatz zu bringenden Werkzeug gehörende Nut 52a über die Vorsprünge 50b des ersten Kupplungselements 50 der Antriebswelle 38 geschoben werden kann.

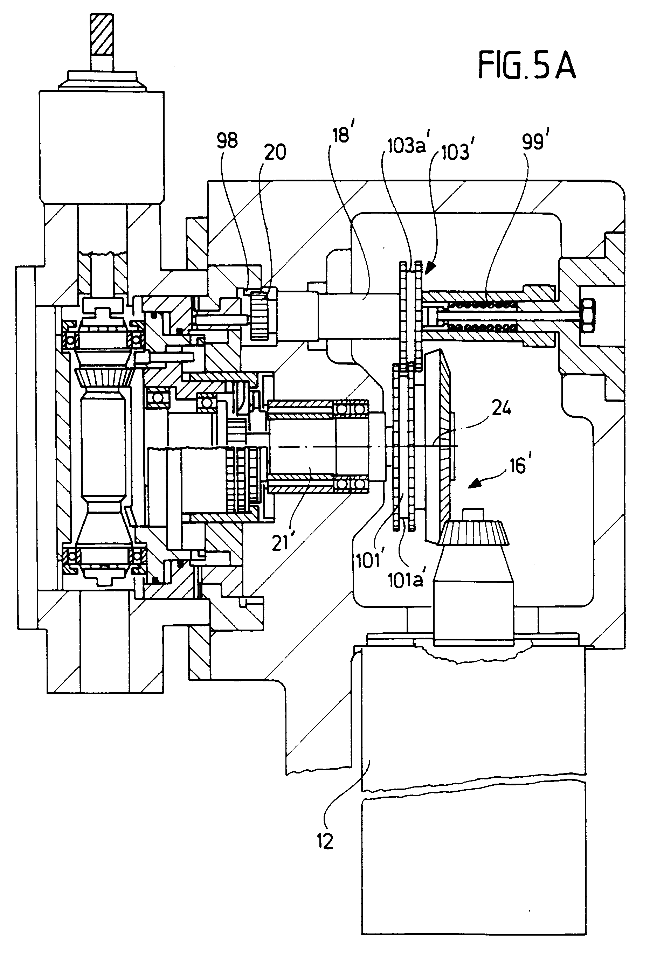

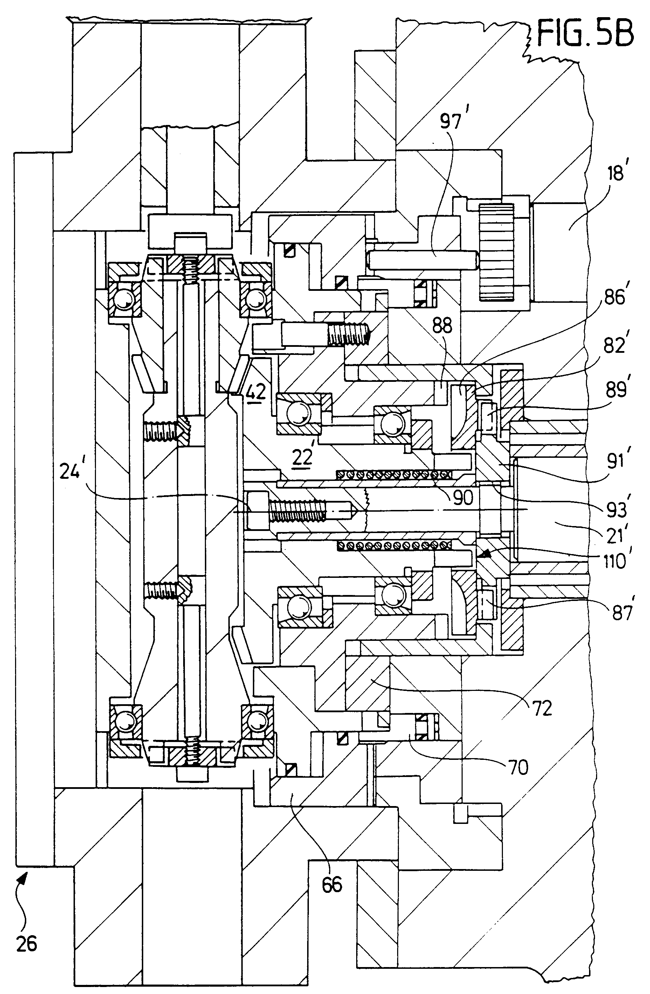

Der zweite erfindungsgemäße Werkzeugrevolver, den die Figuren 5A und 5B zeigen, unterscheidet sich von der vorstehend beschriebenen Ausführungsform nur dadurch, daß der Motor 12 für den Antrieb der Werkzeuge auch die Aufgabe des Schaltens des Revolverkopfs übernimmt, d. h. in der Gestaltung des Revolverkopf-Schaltantriebs, so daß im folgenden auch nur der Revolverkopf-Schaltantrieb erläutert wird und in die Figuren 5A und 5B nur Bezugszeichen für diejenigen Elemente des Werkzeugrevolvers eingetragen wurden, in welchen sich die beiden Ausführungsformen voneinander unterscheiden.

Bei der zweiten Ausführungsform treibt der Motor 12 über ein Winkelgetriebe 16' eine Multifunktionswelle 21' an, vor welcher eine Zentralwelle 22' liegt, an deren vorderem Ende das Kegelrad 42 angeordnet ist. Eine über eine Keilverzahnung 110' von der Zentralwelle 22' koaxial zur Revolverachse 24' sowie in Richtung dieser Achse verschiebbar gehaltene Kupplungsscheibe 82' ist an ihrer gemäß der Zeichnung linken Seite wieder mit einem Satz von Klauen 86' versehen, welche in der bereits geschilderten Weise mit den Klauen 88 des Getriebegehäuses zusammenwirken, während die Kupplungsscheibe 82' an ihrer gemäß der Zeichnung rechten Seite mit einem zweiten Satz von Klauen 87' versehen ist, welche zum Eingriff gebracht werden können mit Klauen 89' einer Mitnehmerscheibe 91', welche über eine Keilverzahnung 93' von der Multifunktionswelle 21' angetrieben wird. Die Kupplungsscheibe 82' wird wieder durch die Druckfeder 90 in ihrer in den Figuren 5A und 5B gezeigten Stellung gehalten, in der die Multifunktionswelle 21' die Zentralwelle 22' antreibt, und zwar über die Keilverzahnung 93', die Mitnehmerscheibe 91', die Klauen 87' und 89', die Kupplungsscheibe 82' und die Keilverzahnung 110'. Wird der Entriegelungskolben 70 gemäß der Zeichnung nach links verschoben, nimmt er über die Verschiebehülse 72 die Kupplungsscheibe 82' mit, so daß deren Klauen 86' zum Eingriff mit den Klauen 88 gebracht werden und die Zentralwelle 22' verriegelt wird, während gleichzeitig die Antriebsverbindung zwischen der Multifunktionswelle 21' und der Zentralwelle 22' gelöst wird, da die Klauen 87' von den Klauen 89' gelöst werden.

Bei dieser zweiten Ausführungsform ist eine Schaltwelle 18' in Richtung ihrer Wellenachse verschiebbar, und zwar aus einer in den Figuren 5A und 5B dargestellten unwirksamen Stellung nach links in eine wirksame Stellung. Diese Verschiebung der Schaltwelle 18' nach links erfolgt automatisch mit dem Entriegeln des Revolverkopfs 26: Wenn nämlich der dritte Ring 66 der HIRTH-Verzahnung durch den Entriegelungskolben 70 nach links verschoben wird, erlaubt er auch ein Verschieben eines gegen den dritten Ring 66 anliegenden Bolzens 97' nach links, gegen welchen wiederum die Schaltwelle 18' unter der Wirkung einer Druckfeder 99' anliegt. Auf der Multifunktionswelle 21' ist ein Zahnrad 101' befestigt, welches mit einem auf der Schaltwelle 18' befestigten Zahnrad 103' zusammenwirken kann. Jedes dieser beiden Zahnräder besitzt einen Einstich in Form einer Ringnut 101a' bzw. 103a', die so bemessen ist, daß die beiden Zahnräder in der in Fig. 5A dargestellten Position der Schaltwelle 18' nicht miteinander kämmen, wohl aber bei entriegeltem Revolverkopf 26, weil der Verschiebeweg des dritten Rings 66 der Breite der Nuten 101a' und 103a' entspricht. Es bleibt noch hinzuzufügen, daß auch bei dieser zweiten Ausführungsform das Ritzel 20 stets im Eingriff mit dem Zahnkranz 98 ist.

Bei beiden Ausführungsformen ermöglicht die dreiteilige HIRTH-Verzahnung also eine einfache, sichere und kostengünstige Lösung des Problems, kürzere Revolverkopfschaltzeiten zu erreichen, gleichzeitig aber wird dadurch eine einfache Möglichkeit zum Abkuppeln von nicht im Einsatz befindlichen angetriebenen Werkzeugen eröffnet.

Der verschiebbare Teil der HIRTH-Verzahnung muß nicht notwendigerweise als Hydraulikkolben ausgebildet sein, da er grundsätzlich auch durch eine Feder in seine Verriegelungsstellung gedrückt werden könnte, so daß es möglich wäre, allein mit dem Entriegelungskolben 70 auszukommen. Es stellt ein besonderes Merkmal der Erfindung dar, daß vom Entriegelungskolben eine Sicherheitsfunktion abgeleitet wird, welche eine Fehlpositionierung des Werkzeugantriebs und damit Beschädigungen verhindert. Gemäß einem weiteren besonderen Merkmal der Erfindung wird vom Entriegelungskolben eine Umkuppelfunktion abgeleitet, um bei Verwendung nur eines Motors entweder die Werkzeuge antreiben oder den Revolverkopf weiterschalten zu können.

## Patentansprüche

1. Werkzeugrevolver für eine Werkzeugmaschine, insbesondere eine Drehmaschine, mit einem an einem Revolverkopfträger (10) um eine Revolverachse (24) drehbar gelagerten mehrere Werkzeugstationen aufweisenden Revolverkopf (26), der an mehreren seiner Werkzeugstationen (28a - 28l) jeweils eine Aufnahme zum Einsetzen eines eine Werkzeugspindel aufweisenden Werkzeughalters für ein drehantreibbares Werkzeug besitzt, mit wenigstens drei ringförmigen und zur Revolverachse konzentrischen (26) Verriegelungselementen (62, 64, 66) zur Verriegelung des Revolverkopfs gegen eine Drehung um die Revolverachse gegenüber dem Revolverkopfträger (10), von denen ein erstes Verriegelungselement (64) mit dem Revolverkopfträger (10) und ein zweites Verriegelungselement (62) mit dem Revolverkopf (26) fest verbunden sowie ein drittes Verriegelungselement (66) in Richtung der Revolverachse (24) zwischen einer wirksamen und einer unwirksamen Stellung verschiebbar ist und die drei Verriegelungselemente so ausgebildet sind, daß in jeder Drehwinkelstellung des Revolverkopfs (26), in der sich eine seiner Werkzeugstationen in einer Arbeitsposition befindet, das seine wirksame Stellung einnehmende dritte Verriegelungselement formschlüssig derart in das erste und zweite Verriegelungselement eingreift, daß der Revolverkopf (26) gegenüber dem Revolverkopfträger (10) unverdrehbar ist, mit einer durch einen sowohl für ein Drehen des Revolverkopfs als auch für einen Antrieb einer Werkzeugspindel vorgesehenen Motor antreibbaren, am Revolverkopfträger (10) drehbar gelagerten Multifunktionswelle (21'), einer am Revolverkopfträger drehbar gelagerten Schaltwelle (18) zum Drehen des Revolverkopfs, einer durch die Multifunktionswelle antreibbaren Werkzeug-Antriebswelle (38), die in einer bezüglich des Revolverkopfträgers (10) stationären Lagerung drehbar gelagert und der gegenüber der Revolverkopf um die Revolverachse (24) verdrehbar ist, und mit einer schaltbaren Revolverschaltkupplung (101', 103') zwischen der Multifunktionswelle und der Schaltwelle, **dadurch gekennzeichnet,** daß die Werkzeug-Antriebswelle (38) derart angeordnet ist, daß sie eine Arbeitsposition für die Werkzeugstationen (28a - 28l) definiert, daß zur Herstellung einer Drehantriebsverbindung zwischen der Werkzeug-Antriebswelle (38) und der Werkzeugspindel eines sich in Arbeitsposition befindlichen Werkzeughalters (30) eine Werkzeugantriebskupplung (54) vorgesehen ist, die wenigstens zwei voneinander trennbare Kupplungselemente (50, 52) aufweist, von denen ein erstes (50) mit der Werkzeugantriebswelle (38) in Drehantriebsverbindung steht und das zweite (52) an der Werkzeugspindel angeordnet ist, wobei die beiden Kupplungselemente (50, 52) derart ausgebildet sind, daß durch Drehen des Revolverkopfs (26) um die Revolverachse (24) das zweite Kupplungselement (52) einer sich in Arbeitsposition befindlichen Werkzeugspindel vom ersten Kupplungselement (50) lösbar sowie das zweite Kupplungselement (52) einer sich außerhalb der Arbeitsposition befindlichen Werkzeugspindel durch Verlagerung der letzten um die Revolverachse (24) in die Arbeitsposition mit dem ersten Kupplungselement (50) in Eingriff bringbar ist, daß der Revolverkopf (26) gegenüber einem zur Revolverachse (24) konzentrischen Werkzeugspindel-Blockierelement (100) verdrehbar ist, durch das eine nicht in Arbeitsposition befindliche Werkzeugspindel gegen Verdrehen um die Spindelachse gesichert ist, daß zwischen der Multifunktionswelle (21') und der Werkzeugantriebswelle (38) eine schaltbare Trennkupplung (87', 89') vorgesehen ist, und daß zur Verriegelung der Werkzeug-Antriebswelle (38) gegen ein Verdrehen bei entriegeltem Revolverkopf (26) eine Antriebswellen-Blockierkupplung (86', 88') mit zwei Kupplungshälften vorgesehen ist, von denen eine erste (88') drehfest mit dem Revolverkopfträger (10) und die zweite (86') drehfest mit der Werkzeug-Antriebswelle (38) verbunden ist.

2. Werkzeugrevolver nach Anspruch 1, dadurch gekennzeichnet, daß sich die Werkzeug-Antriebswelle (38) bezüglich der Revolverachse (24) in radialer Richtung erstreckt.

3. Werkzeugrevolver nach Anspruch 2, dadurch gekennzeichnet, daß die Werkzeug-Antriebswelle (38) zwei Arbeitspositionen für einander bezüglich der Revolverachse (24) in radialer Richtung gegenüberliegende Werkzeugstationen definiert und mit zwei ersten Kupplungselementen (50) versehen ist.

4. Werkzeugrevolver nach einem der vorstehenden Ansprüche, dadurch gekennzeichnet, daß das eine Kupplungselement (52) der Werkzeugantriebskupplung (54) wenigstens eine sich quer zur Werkzeug-Antriebswellenachse (38a) bzw. zur Werkzeugspindelachse erstreckende Nut (52a) und das andere Kupplungselement (50) wenigstens einen entsprechend orientierten Vorsprung (50b) zum Eingriff in diese Nut aufweist.

5. Werkzeugrevolver nach einem der Ansprüche 2 bis 4, gekennzeichnet durch eine zur Revolverachse (24) konzentrische, in einer bezüglich des Revolverkopfträgers (10) festen Lagerung drehbar gelagerte Zentralwelle (22'), welche über ein Winkelgetriebe (40, 42) in ständiger Antriebsverbindung mit der Werkzeug-Antriebswelle (38) steht.

6. Werkzeugrevolver nach einem der vorstehenden Ansprüche, dadurch gekennzeichnet, daß das erste Kupplungselement (50) der Werkzeugantriebskupplung (54) über eine elastische Verbindung (46) derart an der Werkzeug-Antriebswelle (38) angeordnet ist, daß das erste Kupplungselement (50) quer zur Werkzeug-Antriebswellenachse (38a) auslenkbar ist.

7. Werkzeugrevolver nach Anspruch 6, gekennzeichnet durch eine eine Querauslenkung des ersten Kupplungselements (50) zulassende formschlüssige Drehmitnahme (50a, 50b, 52a, 52b) zwischen Werkzeug-Antriebswelle (38) und erstem Kupplungselement (50).

8. Werkzeugrevolver nach Anspruch 6 oder 7, dadurch gekennzeichnet, daß die Werkzeug-Antriebswelle (38) als Hohlwelle ausgebildet ist und einen Biegestab (46) aufnimmt, an dem das erste Kupplungselement (50) befestigt und der im Abstand von letzterem an der Hohlwelle (38) befestigt ist.

9. Werkzeugrevolver nach einem der vorstehenden Ansprüche, dadurch gekennzeichnet, daß das Blockierelement (100) fest mit dem Werkzeugrevolverträger (10) verbunden ist.

10. Werkzeugrevolver nach einem der vorstehenden Ansprüche, dadurch gekennzeichnet, daß das Blockierelement (100) eine zur Revolverachse (24) konzentrische erste Gleitfläche (100a) aufweist, gegen welche eine Werkzeugspindel-feste zweite Gleitflache (52b) anliegt, wenn sich der zugehörige Werkzeughalter (30) außerhalb der Arbeitsposition befindet.

11. Werkzeugrevolver nach Anspruch 10, dadurch gekennzeichnet, daß die zweite Gleitfläche (52b) an dem zweiten Kupplungselement (52) vorgesehen ist.

12. Werkzeugrevolver nach Anspruch 10 oder 11, dadurch gekennzeichnet, daß eine (100a) der beiden Gleitflächen (100a, 52b) von einer sich bezüglich der Revolverachse (24) in Umfangsrichtung erstreckenden Rippe (100) und die andere Gleitfläche (52b) von einer für einen Eingriff der Rippe gestalteten Nut (52a) gebildet wird.

13. Werkzeugrevolver nach einem der vorstehenden Ansprüche, dadurch gekennzeichnet, daß wenigstens eine Kupplungshälfte (86') der Antriebswellen-Blockierkupplung (86', 88' ) zwischen einer wirksamen und einer unwirksamen Stellung bewegbar ist, und daß Bewegungsübertragungsmittel (72) für eine Bewegung der beweglichen Kupplungshälfte (86') in Abhängigkeit von der Verschiebung des dritten Verriegelungselements (66) vorgesehen sind, derart, daß die Antriebswellen-Blockierkupplung (86', 88') bei entriegeltem Revolverkopf (26) eingekuppelt ist.

14. Werkzeugrevolver nach einem oder mehreren der vorstehenden Ansprüche, dadurch gekennzeichnet, daß die Trennkupplung (87', 89') zwischen der Multifunktionswelle (21') und der Antriebsseite (86') der Antriebswellen-Blockierkupplung (86', 88') angeordnet ist.

15. Werkzeugrevolver nach einem oder mehreren der vorstehenden Ansprüche, gekennzeichnet durch Bewegungsübertragungsmittel (72) zum Schalten der Trennkupplung (87', 89') und der Revolverschaltkupplung (101', 103') in Abhängigkeit von der Verschiebung des dritten Verriegelungselements (66) derart, daß bei entriegeltem Revolverkopf (26) die Trennkupplung ausgekuppelt und die Revolverschaltkupplung eingekuppelt ist.

16. Werkzeugrevolver nach einem der vorstehenden Ansprüche, dadurch gekennzeichnet, daß im Revolverkopf (26) ein mit dem Revolverkopfträger (10) fest verbundenes Getriebegehäuse (36) angeordnet ist, um welches der Revolverkopf (26) drehbar und in dem die Werkzeug-Antriebswelle (38) gelagert ist.

17. Werkzeugrevolver nach den Ansprüchen 5 und 16, dadurch gekennzeichnet, daß die Zentralwelle (22') im Getriebegehäuse (36) gelagert und das Winkelgetriebe (40, 42) im Getriebegehäuse angeordnet ist.

18. Werkzeugrevolver nach einem der vorstehenden Ansprüche, dadurch gekennzeichnet, daß das dritte Verriegelungselement (66) als Ringkolben einer zur Revolverachse (24) konzentrischen Druckmittel-Zylinder-Kolben-Einheit (26, 68, 66) ausgebildet ist.

19. Werkzeugrevolver nach einem der vorstehenden Ansprüche, dadurch gekennzeichnet, daß eine Druckmittel-Zylinder-Kolben-Einheit (70, 76, 74) zum Entriegeln des Revolverkopfs (26) vorgesehen ist.

20. Werkzeugrevolver nach Anspruch 19, dadurch gekennzeichnet, daß zwischen dem Kolben (70) der Entriegelungseinheit (70, 76, 74) und der bewegbaren Kupplungshälfte (82, 86) der Antriebswellen-Blockierkupplung (86', 88) ein Bewegungsübertragungselement (72) vorgesehen ist.

21. Werkzeugrevolver nach den Ansprüchen 15 und 19, dadurch gekennzeichnet, daß zwischen dem Kolben (70) der Entriegelungseinheit (70, 76, 74) einerseits und der Trennkupplung (87', 89') sowie der Revolverschaltkupplung (101', 103') andererseits Bewegungsübertragungselemente (72, 66, 97') vorgesehen sind.

22. Werkzeugrevolver nach den Ansprüchen 9 und 16, dadurch gekennzeichnet, daß das Blockierelement (100) fest mit dem Getriebegehäuse (36) verbunden ist.

23. Werkzeugrevolver nach einem oder mehreren der vorstehenden Ansprüche, dadurch gekennzeichnet daß das erste Kupplungselement (50) der Werkzeugantriebskupplung (54) an der Werkzeug-Antriebswelle (38) angeordnet ist.

## Claims

1. Tool turret for a machine tool, in particular a lathe, with a turret head (26) mounted on a turret head carrier (10) for rotation about a turret axis (24) and having a plurality of tool stations, said turret head having at each of a plurality of its tool stations (28a - 28l) a receiving means for the insertion of a tool holder for a tool adapted to be rotatably driven, said tool holder having a tool spindle, with at least three annular locking elements (62, 64, 66) concentric to the turret axis for locking the turret head (26) against rotation about the turret axis in relation to the turret head carrier (10), a first locking element (64) being securely connected to the turret head carrier (10) and a second locking element (62) to the turret head (26), a third locking element (66) being displaceable in the direction of the turret axis (24) between an operative and an inoperative position, and the three locking elements being designed such that in each angular position of the turret head (26) in which one of its tool stations is located in a working position, the third locking element being in its operative position engages positively in the first and second locking elements such that the turret head (26) is non-rotatable relative to the turret head carrier (10), with a multifunctional shaft (21') rotatably mounted on the turret head carrier (10) and drivable by a motor provided for both rotating the turret head and driving a tool spindle, an indexing shaft (18) rotatably mounted on the turret head carrier for rotating the turret head, a tool drive shaft (38) drivable by the multifunctional shaft, said tool drive shaft being rotatably mounted in a bearing stationary in relation to the turret head carrier (10) and the turret head being rotatable about the turret axis (24) in relation to said tool drive shaft, and with an actuatable turret indexing coupling (101', 103') between the multifunctional shaft and the indexing shaft, **characterized in that** the tool drive shaft (38) is arranged such that it defines a working position for the tool stations (28a - 28l), in that a tool drive coupling (54) is provided for establishing a rotary drive connection between the tool drive shaft (38) and the tool spindle of a tool holder (30) located in working position, said tool drive coupling having at least two coupling elements (50, 52) separable from one another, a first coupling element (50) being in rotary drive connection with the tool drive shaft (38) and the second coupling element (52) being arranged on the tool spindle, and the two coupling elements (50, 52) being designed such that by rotating the turret head (26) about the turret axis (24) the second coupling element (52) of a tool spindle located in working position is releasable from the first coupling element (50) and the second coupling element (52) of a tool spindle located outside of the working position is adapted to be brought into engagement with the first coupling element (50) by displacing the tool spindle about the turret axis (24) into the working position, in that the turret head (26) is rotatable in relation to a tool spindle blocking element (100) concentric to the turret axis (24), a tool spindle not located in working position being secured against rotation about the spindle axis by said blocking element, in that an actuatable separation coupling (87', 89') is provided between the multifunctional shaft (21') and the tool drive shaft (38), and in that a drive shaft blocking coupling (86', 88') with two coupling halves is provided for locking the tool drive shaft (38) against rotation when the turret head (26) is unlocked, a first half (88') of said blocking coupling being non-rotatably connected to the turret head carrier (10) and the second half (86') being non-rotatably connected to the tool drive shaft (38).

2. Tool turret as defined in claim 1, characterized in that the tool drive shaft (38) extends in radial direction in relation to the turret axis (24).

3. Tool turret as defined in claim 2, characterized in that the tool drive shaft (38) defines two working positions for tool stations located opposite one another in radial direction in relation to the turret axis (24) and is provided with two first coupling elements (50).

4. Tool turret as defined in any of the preceding claims, characterized in that the one coupling element (52) of the tool drive coupling (54) has at least one groove (52a) extending transversely to the tool drive shaft axis (38a) and the tool spindle axis, respectively, and the other coupling element (50) has at least one correspondingly oriented projection (50b) for engagement in this groove.

5. Tool turret as defined in any of claims 2 to 4, characterized by a central shaft (22') concentric to the turret axis (24) and rotatably mounted in a bearing fixed in relation to the turret head carrier (10), said central shaft being in constant drive connection with the tool drive shaft (38) via a mitre gear (40, 42).

6. Tool turret as defined in any of the preceding claims, characterized in that the first coupling element (50) of the tool drive coupling (54) is arranged on the tool drive shaft (38) via an elastic connection (46) such that the first coupling element (50) is deflectable transversely to the tool drive shaft axis (38a).

7. Tool turret as defined in claim 6, characterized by a form-locking rotary entrainment means (50a, 50b, 52a, 52b) between tool drive shaft (38) and first coupling element (50) allowing a transverse deflection of the first coupling element (50).

8. Tool turret as defined in claim 6 or 7, characterized in that the tool drive shaft (38) is designed as a hollow shaft and accommodates a bending rod (46), the first coupling element (50) being attached to said bending rod and said bending rod being attached to the hollow shaft (38) at a distance from said first coupling element.

9. Tool turret as defined in any of the preceding claims, characterized in that the blocking element (100) is securely connected to the tool turret carrier (10).

10. Tool turret as defined in any of the preceding claims, characterized in that the blocking element (100) has a first sliding surface (100a) concentric to the turret axis (24), a second sliding surface (52b) fixed on the tool spindle abutting on said first sliding surface when the associated tool holder (30) is outside the working position.

11. Tool turret as defined in claim 10, characterized in that the second sliding surface (52b) is provided on the second coupling element (52).

12. Tool turret as defined in claim 10 or 11, characterized in that one (100a) of the two sliding surfaces (100a, 52b) is formed by a rib (100) extending in circumferential direction in relation to the turret axis (24) and the other sliding surface (52b) is formed by a groove (52a) shaped for engagement of the rib.

13. Tool turret as defined in any of the preceding claims, characterized in that at least one coupling half (86') of the drive shaft blocking coupling (86', 88') is movable between an operative and an inoperative position, and in that movement transfer means (72) for a movement of the movable coupling half (86') as a function of the displacement of the third locking element (66) are provided such that the drive shaft blocking coupling (86', 88') is engaged when the turret head (26) is unlocked.

14. Tool turret as defined in any or several of the preceding claims, characterized in that the separation coupling (87', 89') is arranged between the multifunctional shaft (21') and the drive side (86') of the drive shaft blocking coupling (86', 88').

15. Tool turret as defined in any or several of the preceding claims, characterized by movement transfer means (72) for actuating the separation coupling (87', 89') and the turret indexing coupling (101', 103') as a function of the displacement of the third locking element (66) such that when the turret head (26) is unlocked the separation coupling is disengaged and the turret indexing coupling engaged.

16. Tool turret as defined in any of the preceding claims, characterized in that a gear housing (36) securely connected to the turret head carrier (10) is arranged in the turret head (26), the turret head (26) being rotatable about said housing and the tool drive shaft (38) mounted therein.

17. Tool turret as defined in claims 5 and 16, characterized in that the central shaft (22') is mounted in the gear housing (36) and the mitre gear (40, 42) is arranged in the gear housing.

18. Tool turret as defined in any of the preceding claims, characterized in that the third locking element (66) is designed as a ring piston of a pressure-medium cylinder-piston unit (26, 68, 66) concentric to the turret axis (24).

19. Tool turret as defined in any of the preceding claims, characterized in that a pressure-medium cylinder-piston unit (70, 76, 74) is provided for unlocking the turret head (26).

20. Tool turret as defined in claim 19, characterized in that a movement transfer element (72) is provided between the piston (70) of the unlocking unit (70, 76, 74) and the movable coupling half (82, 86) of the drive shaft blocking coupling (86', 88).

21. Tool turret as defined in claims 15 and 19, characterized in that movement transfer elements (72, 66, 97') are provided between the piston (70) of the unlocking unit (70, 76, 74) on the one hand, and the separation coupling (87', 89') as well as the turret indexing coupling (101', 103') on the other hand.

22. Tool turret as defined in claims 9 and 16, characterized in that the blocking element (100) is securely connected to the gear housing (36).

23. Tool turret as defined in any or several of the preceding claims, characterized in that the first coupling element (50) of the tool drive coupling (54) is arranged on the tool drive shaft (38).

## Revendications

1. Tourelle porte-outils pour une machine-outil, notamment un tour, comportant une tête de tourelle (26), montée sur un support (10) de façon à pouvoir tourner autour d'un axe (24) de la tourelle, comportant plusieurs stations d'outils et qui est pourvue, dans plusieurs desdites stations d'outils (28a - 28l) respectivement d'un réceptacle servant à recevoir un porte-outil comportant une broche pour un outil pouvant être entraînée en rotation, la tourelle comportant en outre au moins trois éléments de verrouillage (62, 64, 66), de forme annulaire, concentriques (26) à l'axe de tourelle et servant au verrouillage de la tête de tourelle pour empêcher une rotation autour de l'axe de tourelle par rapport à son support (10), un premier élément de verrouillage (64) étant relié solidement au support (10) de la tête de tourelle et un second élément de verrouillage (62) étant relié solidement à la tête de tourelle (26) tandis qu'un troisième élément de verrouillage (66) est déplaçable en direction de l'axe de tourelle (24) entre une position active et une position inactive, et les trois éléments de verrouillage étant agencés de telle sorte que, dans chaque position angulaire de la tête de tourelle (26) où une de ses stations d'outils se trouve dans une position de travail, le troisième élément de verrouillage occupant sa position active s'accroche par conjugaison de formes dans le premier et dans le second élément de verrouillage de telle sorte que la tête de tourelle (26) ne puisse pas tourner par rapport au support (10) de la tête de tourelle, cette tourelle comportant en outre un arbre multifonction (21'), monté de façon tournante sur le support (10) de la tête de tourelle et pouvant être entraîné par un moteur prévu aussi bien pour une rotation de la tête de tourelle que pour l'entraînement d'une broche d'outil, un arbre de commutation (18), monté de façon tournante sur le support (10) de la tête de tourelle et servant à faire tourner la tête de tourelle, un arbre d'entraînement d'outil (38) pouvant être entraîné par l'arbre multifonction, qui est monté de façon tournante dans un palier stationnaire par rapport au support (10) de la tête de tourelle et qui peut tourner autour de l'axe (24) de la tourelle par rapport à la tête de tourelle, et également un accouplement de commande de tourelle commutable (101', 103'), qui est disposé entre l'arbre multifonction et l'arbre de commutation, tourelle caractérisée en ce que l'arbre d'entraînement d'outil (38) est disposé de telle sorte qu'il définisse une position de travail pour les stations d'outils (28a - 28l), en ce qu'il est prévu pour l'établissement d'une liaison d'entraînement en rotation entre l'arbre d'entraînement d'outils (38) et la broche d'un porte-outil (30) située dans sa position de travail, un accouplement d'entraînement d'outil (54) qui comporte au moins deux éléments d'accouplement (50, 52) séparables l'un de l'autre et dont un premier élément (50) est en liaison d'entraînement en rotation avec l'arbre d'entraînement d'outil (38) tandis que le second élément (52) est disposé sur la broche d'outil, les deux éléments d'accouplement (50, 52) étant agencés de telle sorte que, sous l'effet d'une rotation de la tête de tourelle (26) autour de l'axe de tourelle (24), le second élément d'accouplement (52) puisse être séparé d'une broche d'outil située dans la position de travail par le premier élément d'accouplement (50) et également que le second élément d'accouplement (52) d'une broche d'outil écartée de la position de travail puisse être amené en prise avec le premier élément d'accouplement (50), par transfert de cette broche autour de l'axe de tourelle (24) jusque dans la position de travail, en ce que la tête de tourelle (26) peut tourner par rapport à un élément (100) de blocage de broche d'outil, concentrique à l'axe de tourelle (24), et à l'aide duquel une broche d'outil ne se trouvant pas en position de travail est empêchée de tourner autour de l'axe de tourelle, en ce qu'il est prévu entre l'arbre multifonction (21') et l'arbre d'entraînement d'outil (38) un accouplement séparateur commutable (87', 89'), et en ce qu'il est prévu, pour un verrouillage de l'arbre d'entraînement d'outil (38) afin de l'empêcher de tourner quand la tête de tourelle (26) est déverrouillée, un accouplement (86', 88') de blocage d'arbre d'entraînement qui est pourvu de deux moitiés d'accouplement dont la première (88') est reliée de façon non tournante au support (10) de tête de tourelle tandis que la seconde moitié d'accouplement (86') est reliée de façon non tournante à l'arbre d'entraînement d'outil (38).

2. Tourelle porte-outils selon la revendication 1, caractérisée en ce que l'arbre d'entraînement d'outil (38) est orienté radialement par rapport à l'axe de tourelle (24).

3. Tourelle porte-outils selon la revendication 2, caractérisée en ce que l'arbre d'entraînement d'outil (38) définit deux positions de travail pour des stations d'outils situées dans des positions mutuellement opposées dans une direction radiale par rapport à l'axe de tourelle (24) et est pourvu de deux premiers éléments d'accouplement (50).

4. Tourelle porte-outils selon une des revendications précédentes, caractérisée en ce qu'un des éléments d'accouplement (52) de l'accouplement d'entraînement d'outil (54) comporte au moins une rainure (52a) s'étendant perpendiculairement à l'axe (38a) de l'arbre d'entraînement d'outil ou à l'axe de broche d'outil et l'autre élément d'accouplement (50) comporte au moins une saillie (50b), orientée en correspondance pour s'engager dans ladite rainure.

5. Tourelle porte-outils selon une des revendications 2 à 4, caractérisée en ce qu'il est prévu un arbre central (22'), concentrique à l'axe de tourelle (24), monté de façon tournante dans un palier fixe par rapport au support (10) de la tête de tourelle et qui est constamment en liaison d'entraînement avec l'arbre d'entraînement d'outil (38) par l'intermédiaire d'un engrenage angulaire (40, 42).

6. Tourelle porte-outils selon une des revendications précédentes, caractérisée en ce que le premier élément d'accouplement (50) de l'accouplement d'entraînement d'outil (54) est monté sur l'arbre d'entraînement d'outil (38) par l'intermédiaire d'une liaison élastique (46) de telle sorte que ce premier élément d'accouplement (50) puisse être écarté perpendiculairement à l'axe (38a) de l'arbre d'entraînement d'outil.

7. Tourelle porte-outils selon la revendication 6, caractérisée en ce qu'il est prévu un entraîneur en rotation (50a, 50b, 52a, 52b), opérant par conjugaison de formes entre l'arbre d'entraînement d'outil (38) et le premier élément d'accouplement (50) et permettant un écartement transversal du premier élément d'accouplement (50).

8. Tourelle porte-outils selon une des revendications 6 ou 7, caractérisée en ce que l'arbre d'entraînement d'outil (38) est agencé comme un arbre creux et reçoit une barre de flexion (46), sur laquelle le premier élément d'accouplement (50) est monté et qui est fixée à distance de ce dernier sur l'arbre creux (38).

9. Tourelle porte-outils selon une des revendications précédentes, caractérisée en ce que l'élément de blocage (100) est relié solidement au support (10) de la tourelle porte-outils.

10. Tourelle porte-outils selon une des revendications précédentes, caractérisée en ce que l'élément de blocage (100) comporte une première surface de glissement (100a), concentrique à l'axe de tourelle (24) et contre laquelle s'applique une seconde surface de glissement (52b), solidaire d'une broche d'outil, lorsque le porte-outil correspondant (30) est écarté de la position de travail.

11. Tourelle porte-outils selon la revendication 10, caractérisée en ce que la seconde surface de glissement (52b) est prévue sur le second élément d'accouplement (52).

12. Tourelle porte-outils selon la revendication 10 ou 11, caractérisée en ce qu'une (100a) des deux surfaces de glissement (100a, 52b) est créée par une nervure (100) s'étendant dans une direction circonférentielle par rapport à l'axe de tourelle (24) et l'autre surface de glissement (52b) est créée par une rainure (52a) profilée pour recevoir la nervure.

13. Tourelle porte-outils selon une des revendications précédentes, caractérisée en ce qu'au moins une moitié (86') de l'accouplement de blocage (86', 88') d'arbre d'entraînement est déplaçable entre une position active et une position inactive et en ce qu'il est prévu des moyens (72) pour transmettre un mouvement de la moitié mobile (86') de l'accouplement en fonction de la translation du troisième élément de verrouillage (66) de telle sorte que l'accouplement de blocage (86', 88') d'arbre d'entraînement soit actionné quand la tête de tourelle (26) est déverrouillée.

14. Tourelle porte-outils selon une ou plusieurs des revendications précédentes, caractérisée en ce que l'accouplement séparateur (87', 89') est disposé entre l'arbre multifonction (21') et le côté menant (66') de l'accouplement de blocage (86', 88') d'arbre d'entraînement.

15. Tourelle porte-outils selon une ou plusieurs des revendications précédentes, caractérisée par des moyens (72) de transmission de mouvement pour commander l'accouplement séparateur (87', 89') et l'accouplement de commande de tourelle (101', 103') en fonction de la translation du troisième élément de verrouillage (66) de telle sorte que, lors d'un déverrouillage de la tête de tourelle (26), l'accouplement séparateur soit ouvert et l'accouplement de commande de tourelle soit ferme.

16. Tourelle porte-outils selon une des revendications précédentes, caractérisée en ce qu'il est prévu dans la tête de tourelle (26) un carter de transmission (36) relié solidement au support (10) de cette tête de tourelle, autour duquel la tête de tourelle (26) peut tourner et dans lequel l'arbre (38) d'entraînement d'outil est monté.

17. Tourelle porte-outils selon une des revendications 5 et 16, caractérisée en ce que l'arbre central (22') est monté dans le carter de transmission (36) et l'engrenage angulaire (40, 42) est disposé dans le carter de transmission.

18. Tourelle porte-outils selon une des revendications précédentes, caractérisée en ce que le troisième élément de verrouillage (66) est agencé comme un piston annulaire d'une unité à cylindre-piston (26, 68, 66), actionnée par fluide sous pression et disposée concentriquement à l'axe de tourelle (24).

19. Tourelle porte-outils selon une des revendications précédentes, caractérisée en ce qu'il est prévu une unité à cylindre-piston (70, 76, 74), actionnée par fluide sous pression, pour déverrouiller la tête de tourelle (26).

20. Tourelle porte-outils selon la revendication 19, caractérisée en ce qu'il est prévu un élément de transmission de mouvement (72) entre le piston (70) de l'unité de déverrouillage (70, 76, 74) et la moitié mobile (82, 86) de l'accouplement (86', 88) de blocage d'arbres d'entraînement.

21. Tourelle porte-outils selon les revendications 15 et 19, caractérisée en ce qu'il est prévu des éléments de transmission de mouvement (72, 66, 97') entre d'une part le piston (70) de l'unité de déverrouillage (70, 76, 74) et l'accouplement séparateur (87', 89') et d'autre part l'accouplement de commande de tourelle (101', (103').

22. Tourelle porte-outils selon les revendications 9 et 16, caractérisée en ce que l'élément de blocage (100) est relié solidement au carter de transmission (36).

23. Tourelle porte-outils selon une ou plusieurs des revendications précédentes, caractérisée en ce que le premier élément d'accouplement (50) de l'accouplement d'entraînement d'outil (54) est monté sur l'arbre d'entraînement d'outil (38).
